# EUROPEAN PATENT APPLICATION

(11) **EP 4 712 534 A1**
(43) Date of publication of application: **18.03.2026**
(21) Application number: 23936881.4
(22) Date of filing: 12.05.2023
(51) Int. Cl.: H04W 12/63, H04W 64/00

(54) **SIDELINK COMMUNICATION METHOD, APPARATUS AND DEVICE, AND STORAGE MEDIUM**

(71) Applicant: Beijing Xiaomi Mobile Software Co., Ltd., Beijing 100085 (CN)
(72) Inventor: LU, Wei, Beijing 100085 (CN); MAO, Yuxin, Beijing 100085 (CN)
(74) Representative: Dehns Germany Partnerschaft mbB
(86) International application number: PCT/CN2023/094068
(87) International publication number: WO 2024/234191

(57) **Abstract**

The present disclosure relates to a sidelink communication method, apparatus and device, and a storage medium. The method comprises: on the basis of a first rule, determining that a positioning service is allowed to be executed with a second terminal, wherein the second terminal is used for providing the positioning service, and the first rule is used for indicating whether the positioning service is allowed to be executed with the second terminal; and sending first information, wherein the first information is used for instructing the second terminal to execute the positioning service. By means of a first rule, it is determined that a corresponding positioning service is allowed to be executed with a second terminal, such that a privacy policy for the positioning service can be executed with network coverage and/or without network coverage, thereby preventing some terminals in need of privacy protection from exposing corresponding privacy information, and thus improving security during communication.

## Description

### FIELD

The present disclosure relates to the field of communication technology, and in particular to a sidelink (SL) communication method, apparatus, and device, as well as a storage medium.

### BACKGROUND

At present, a target terminal may discover and select one or more located terminals to facilitate accurate positioning of the target terminal. For example, the target terminal discovers and selects a located terminal, and then utilizes an absolute location of the located terminal and a relative location between the target terminal and the located terminal to obtain the accurate location of the target terminal. The relative location may be, for example, an SL measurement position.

### SUMMARY

In order to overcome the problems existing in the related art, the present disclosure provides an SL communication method, apparatus, device, as well as a storage medium.

According to a first aspect of embodiments of the present disclosure, there is provided an SL communication method, which is performed by a first terminal, and includes: determining, based on a first rule, that a positioning service with a second terminal is allowed, where the second terminal is configured to provide the positioning service, and the first rule is used to indicate whether the positioning service with the second terminal is allowed; and sending first information, where the first information is used to instruct the second terminal to perform the positioning service.

According to a second aspect of embodiments of the present disclosure, there is provided an SL communication method, which is performed by a second terminal, and includes: receiving first information sent by a first terminal, where the first information is used to instruct the second terminal to perform a positioning service; and determining, based on a first rule, that the positioning service with the first terminal is allowed, where the first rule is used to indicate whether the positioning service with the first terminal is allowed.

According to a third aspect of embodiments of the present disclosure, there is provided an SL communication apparatus, which includes: a processing module, configured to determine, based on a first rule, that a positioning service with a second terminal is allowed, where the second terminal is configured to provide the positioning service, and the first rule is used to indicate whether the positioning service with the second terminal is allowed; and a sending module, configured to send first information, where the first information is used to instruct the second terminal to perform the positioning service.

According to a fourth aspect of embodiments of the present disclosure, there is provided an SL communication apparatus, which includes: a receiving module, configured to receive first information sent by a first terminal, where the first information is used to instruct a second terminal to perform a positioning service; and a processing module, configured to determine, based on a first rule, that the positioning service with the first terminal is allowed, where the first rule is used to indicate whether the positioning service with the first terminal is allowed.

According to a fifth aspect of embodiments of the present disclosure, there is provided an SL communication device, which includes: a processor; and a memory for storing processor-executable instructions; the processor is configured to: perform the first aspect any method as described in the first aspect.

According to a sixth aspect of embodiments of the present disclosure, there is provided an SL communication device, which includes: a processor; and a memory for storing processor-executable instructions; the processor is configured to: perform the second aspect and any method as described in the second aspect.

According to a seventh aspect of embodiments of the present disclosure, there is provided a non-transitory computer-readable storage medium, having stored therein instructions that, when executed by a processor of a first terminal, cause the first terminal to perform the first aspect any method as described in the first aspect.

According to an eighth aspect of embodiments of the present disclosure, there is provided a non-transitory computer-readable storage medium, having stored therein instructions that, when executed by a processor of a second terminal, cause the second terminal to perform the second aspect and any method as described in the second aspect.

The technical solutions provided by embodiments of the present disclosure may include the following beneficial effects: it is determined based on the first rule that the corresponding positioning service with the second terminal is allowed, so that the privacy policy for the positioning service may be executed in network coverage and/or out of network coverage, thereby avoiding the exposure of respective privacy information of some terminals that require privacy protection, and improving the security of the communication process.

It is to be understood that the foregoing general description and the following detailed description are illustrative and explanatory and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with this specification, serve to explain the principles of the present disclosure.
FIG. 1 is a schematic diagram showing a wireless communication system according to an example embodiment.
FIG. 2 is a flowchart showing an SL communication method according to an example embodiment.
FIG. 3 is a flowchart showing another SL communication method according to an example embodiment.
FIG. 4 is a schematic diagram showing SL communication interaction according to an example embodiment.
FIG. 5 is a schematic diagram showing another SL communication interaction according to an example embodiment.
FIG. 6 is a schematic diagram showing yet another SL communication interaction according to an example embodiment.
FIG. 7 is a schematic diagram showing yet another SL communication interaction according to an example embodiment.
FIG. 8 is a schematic diagram showing an SL communication apparatus according to an example embodiment.
FIG. 9 is a schematic diagram showing another SL communication apparatus according to an example embodiment.
FIG. 10 is a schematic diagram showing an SL communication device according to an example embodiment.
FIG. 11 is a schematic diagram showing another SL communication device according to an example embodiment.

### DETAILED DESCRIPTION

Illustrative embodiments will be described in detail herein, examples of which are illustrated in the accompanying drawings. The following description refers to the accompanying drawings in which the same numbers in different drawings represent the same or similar elements unless otherwise represented. The implementations described in the following illustrative embodiments do not represent all implementations consistent with the present disclosure.

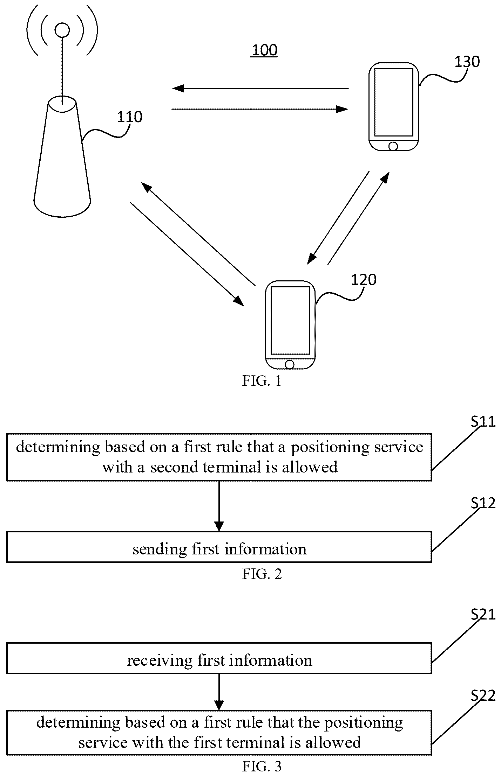

The communication method involved in the present disclosure may be applied to the wireless communication system 100 shown in FIG. 1. The network system may include a network device 110, a first terminal 120 and a second terminal 130. It may be understood that the wireless communication system shown in FIG. 1 is illustrative, and the wireless communication system may also include other network devices, such as a core network device, a wireless relay device, and a wireless backhaul device, which are not shown in FIG. 1. Embodiments of the present disclosure do not limit the number of network devices and the number of terminals included in the wireless communication system.

It may be further understood that the wireless communication system of embodiments of the present disclosure is a network that provides wireless communication functions. The wireless communication system may adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier-frequency division multiple access (SC-FDMA), or carrier sense multiple access with collision avoidance. Due to the difference in capacity, rate, delay and other factors, networks may be divided into 2nd generation (G) network, 3G network, 4G network or future evolution network, such as 5th generation wireless communication system (5G) network, here the 5G network may also be called NR. For the convenience of description, the present disclosure sometimes refers to the wireless communication network as a network.

Further, the network device 110 involved in the present disclosure may also be referred to as a wireless access network device. The wireless access network device may be: a base station, an evolved node B (eNB), a home base station, an access point (AP) in a wireless fidelity (WIFI) system, a wireless relay node, a wireless backhaul node, a transmission point (TP), or a transmission and reception point (TRP), etc. It may also be a gNB in an NR system, or it may be a component of a base station or one or more devices constituting a base station. When the wireless communication system is a vehicle-to-everything (V2X) communication system, the network device may also be a vehicle-mounted device. It should be understood that in embodiments of the present disclosure, the specific technology and device form adopted by the network device are not limited.

Further, the first terminal 120 and the second terminal 130 involved in the present disclosure may also be referred to as terminals, terminal devices, user equipments (UEs), mobile stations (MS), mobile terminals (MTs), etc., which are devices that provide voice and/or data connectivity to users. For example, the terminal may be a device with a wireless connection function, such as a handheld device, a vehicle-mounted device, etc. At present, some examples of terminals are: smartphones, pocket personal computers (PPCs), palmtops, personal digital assistants (PDAs), laptop computers, tablet computers, wearable devices, or vehicle-mounted devices, etc. In addition, when the wireless communication system is a vehicle-to-everything (V2X) communication system, the terminal device may also be a vehicle-mounted device. It should be understood that embodiments of the present disclosure do not limit the specific technology and device form adopted by the terminal.

In embodiments of the present disclosure, the network device 110 and the terminal may adopt any feasible wireless communication technology to realize mutual data transmission. A transmission channel where the network device 110 sends data to the terminal is called a downlink (DL) channel, and a transmission channel where the terminal sends data to the network device 110 is called an uplink (UL) channel. It may be understood that in embodiments of the present disclosure, the terminal may be the first terminal 120, and the terminal may also be the second terminal 130. It may be understood that the network device involved in embodiments of the present disclosure may be a base station. Of course, the network device may also be any other possible network device, and the terminal may be any possible terminal, which are not limited by the present disclosure.

In some embodiments, it is specified that a target terminal may discover and select one or more located terminals. Here, the located terminal may be a terminal that may perform a ranging/sidelink (SL) positioning procedure. The target terminal may discover and select a located terminal, and then utilize an absolute location of the located terminal and an SL position result between the target terminal and the located terminal to determine the accurate location of the target terminal, so as to achieve accurate positioning of the target UE. Of course, the absolute location of the located terminal may be obtained through a network device, and the SL position result may be obtained through the measurement of the target terminal and the located terminal. The specific implementation process may refer to the related art, and will not be repeated here.

However, in a case where the target terminal discovers and selects a located terminal that does not allow the exposure of its location information, if privacy information of the located terminal is sent to the target terminal, the privacy information of the located terminal will be violated. Therefore, for the located terminal that shares location information with any target terminal, it is unclear how the located terminal shares its location information and how the located terminal selects the exposure of similar privacy information.

In some embodiments, for any terminal, in a case where it is in network coverage, privacy/authorization check may be performed with the assistance of the network, e.g. via checking against the privacy profile or authorization information maintained by the network. However, in a case where the terminal is out of network coverage, the privacy/authorization check via the network will become impossible. Hence, regarding the privacy information like location information, it is unclear at present for the terminal whether a positioning service request from other terminals in communication with it is permitted or not, and/or whether its location information is allowed to be shared with other terminals or not, etc.

In view of above, in the present disclosure, it is determined based on the first rule that a corresponding positioning service with a second terminal is allowed, so that a privacy policy for a positioning service may be executed both in network coverage and out of network coverage, thereby avoiding the exposure of respective privacy information of some terminals that need privacy protection, and improving the security of the communication process.

FIG. 2 is a flowchart showing an SL communication method according to an example embodiment. As shown in FIG. 2, the method is performed by a first terminal and may include the following steps:

In step S11, it is determined based on a first rule that a positioning service with a second terminal is allowed.

In some embodiments, the first terminal may determine based on the first rule that the positioning service with the second terminal is allowed. The second terminal may be a terminal for providing the positioning service. The first rule may be used to indicate whether the first terminal is allowed to perform the positioning service with the second terminal.

For example, the first terminal discovers and selects the second terminal. The first terminal may determine based on the first rule whether it is allowed to perform the positioning service with the second terminal. In a case where the first terminal is allowed to perform the positioning service with the second terminal, S12 is performed to determine a location of the first terminal to realize positioning of the first terminal.

In some embodiments, the first rule may specify which second terminal the first terminal is allowed to perform the positioning service with. For another example, the first rule may specify which second terminal the first terminal is not allowed to perform the positioning service with.

For example, the first rule may include a privacy configuration rule. The first rule may also include an authorization rule. The first rule may be requested and obtained by the first terminal from the network device. The first rule may be sent by the network device to the first terminal. The first rule may also be pre-stored in the first terminal. The present disclosure does not limit how the first terminal determines the first rule.

For example, the first terminal may determine, according to the authorization rule, which second terminal is allowed to perform a positioning service with the first terminal. In a case where it is determined that some second terminals are allowed to perform the positioning service with the first terminal, the first terminal may perform S12, so as to perform the positioning service with the second terminal and determine the accurate location of the first terminal.

For another example, the first terminal may determine, based on the privacy configuration rule, whether the first terminal is allowed to perform a positioning service with some second terminals. In a case where the privacy configuration rule allows the first terminal to perform the positioning service with some second terminals, the first terminal may perform S12, so as to perform the positioning service with the second terminal and determine the accurate location of the first terminal.

For another example, the first terminal may determine, according to the authorization rule, which second terminal is allowed to perform a positioning service with the first terminal, and the first terminal may determine, based on the privacy configuration rule, whether the first terminal is allowed to perform the positioning service with some second terminals. In a case where it is determined according to the authorization rule that a certain second terminal is allowed to perform the positioning service with the first terminal, and the first terminal is allowed to perform the positioning service with the second terminal, the first terminal may perform S12, so as to perform the positioning service with the second terminal and determine the accurate location of the first terminal.

In step S12, first information is sent.

In some embodiments, the first terminal may send the first information. The first information is used to instruct the second terminal to perform the positioning service.

For example, the first terminal may send the first information to the second terminal. The first information is used to instruct the second terminal to perform the positioning service, so that the second terminal will perform the positioning service based on the first information, so as to enable the first terminal to accurately determine its own location. For example, the second terminal may establish a communication link with the first terminal and send positioning information to the first terminal, so as to enable the first terminal to determine its own location based on the positioning information shared by the second terminal.

For example, in a case where the first terminal does not need to receive a response from the second terminal in a discovery phase, the first terminal may be an announcing terminal, and the second terminal may be a monitoring terminal.

For another example, in a case where the first terminal needs to receive a response from the second terminal in the discovery phase, the first terminal may be a discoverer terminal, and the second terminal may be a discoveree terminal.

In some embodiments, the first information may include a terminal identifier of the first terminal and an SL positioning service code. The identifier may be an identity (ID) or an index. In some cases, the first information may also include any possible information such as a terminal identifier of the second terminal.

For example, the identifier of the first terminal can directly and uniquely indicate the first terminal. For another example, the identifier of the first terminal can indicate a terminal role of the first terminal. It is understandable that different terminal roles may be considered as different terminal types or different terminal categories. Of course, the terminal role may also be understood as a kind of identity information of the terminal.

For example, the terminal role may include: one or more of a target terminal, a located terminal, or a reference terminal. The target terminal may be considered as a terminal that wishes to determine its own location. The located terminal may determine the location of the target terminal by using SL positioning. The location of the located terminal is known, for example, its absolute location may be obtained through positioning of the Uu interface. The located terminal may be considered as a special reference terminal, for example, it may be considered as an SL reference terminal. The SL reference terminal is able to send and/or receive reference signals for positioning and providing positioning-related information via SL, and support positioning of the target terminal based on such reference signals.

Of course, the terminal role may include more possible situations, and may be arbitrarily added, deleted or modified as required, which is not limited in the present disclosure.

In some embodiments, the above steps S11 and S12 may be performed in the discovery phase of SL communication between the first terminal and the second terminal.

In some embodiments, the above steps S11 and S12 may be performed in a proximity communication PC5 link establishment phase of SL communication between the first terminal and the second terminal, or in a PC5 link modification phase of SL communication between the first terminal and the second terminal.

For example, for the case where the first terminal and/or the second terminal are terminals with V2X capability, there is no discovery phase in the SL communication between the first terminal and the second terminal.

For another example, for the case where the first terminal and the second terminal are terminals with proximity service (ProSe) capability, if the above steps S11 and S12 are not performed in the discovery phase of the SL communication between the first terminal and the second terminal, these steps may be performed in the PC5 link establishment phase or the PC5 link modification phase of the SL communication between the first terminal and the second terminal.

In the present disclosure, it is determined based on the first rule that a corresponding positioning service with the second terminal is allowed, so that the privacy policy for the positioning service may be executed in network coverage and/or out of network coverage, thereby avoiding the exposure of respective privacy information of some terminals that need privacy protection, and improving the security of the communication process.

In the SL communication method according to embodiments of the present disclosure, the S11 of determining based on the first rule that the positioning service with the second terminal is allowed may include: determining based on the first rule that the positioning service with the second terminal is allowed, in a first phase of SL communication between the first terminal and the second terminal.

In some embodiments, in the first phase of the SL communication between the first terminal and the second terminal, the first terminal may determine, based on the first rule, that the positioning service with the second terminal is allowed.

For example, in the first phase of the SL communication between the first terminal and the second terminal, the first terminal may determine based on the privacy configuration rule that it is allowed to expose its own privacy information to the second terminal for performing the positioning service. It may be understood that the first terminal is allowed to expose its own privacy information to the second terminal, which may be considered as that the first terminal is allowed to send its private information (such as location information, identity information and other privacy-related information) to the second terminal.

For example, in the first phase of the SL communication between the first terminal and the second terminal, the first terminal may determine, based on the authorization rule, to authorize the second terminal for the positioning service.

In some embodiments, the first phase may include at least one of: a discovery phase of SL communication between the first terminal and the second terminal; a PC5 link establishment phase of SL communication between the first terminal and the second terminal; or a PC5 link modification phase of SL communication between the first terminal and the second terminal.

In some embodiments, the first phase includes the discovery phase of SL communication between the first terminal and the second terminal. In this case, the first terminal and the second terminal may be non-V2X terminals. The first terminal may authorize the second terminal for the positioning service during the discovery phase of the SL communication between the first terminal and the second terminal, and/or determine based on the privacy configuration rule that the positioning service with the second terminal is allowed.

It may be understood that for the SL communication between V2X terminals, there is no discovery phase.

In some embodiments, the first phase includes the discovery phase of the SL communication between the first terminal and the second terminal. The first terminal may broadcast the first information. In this case, the first terminal may not receive a response from the second terminal. The first terminal is an announcing terminal, and the second terminal is a monitoring terminal.

For example, the announcing terminal may, based on the authorization rule, determine which monitoring terminal is allowed to perform the positioning service with the announcing terminal. The announcing terminal may, based on the privacy configuration rule, verify whether it is allowed to expose its own privacy information such as its own location, for example verifying whether the announcing terminal is allowed to perform the positioning service with the monitoring terminal. It may be understood that for the case where the first rule is only configured with the authorization rule, if the announcing terminal authorizes a certain monitoring terminal, the announcing terminal may broadcast the first information. The first information may include a terminal identifier of the announcing terminal, an SL positioning service code, etc. For the case where the first rule is only configured with the privacy configuration rule, if the announcing terminal allows the exposure of its own privacy information like its own location to the monitoring terminal for performing the positioning service, the announcing terminal may broadcast the first information. Of course, for the case where the first rule configures both the authorization rule and the privacy configuration rule, when the announcing terminal authorizes a certain monitoring terminal, and the announcing terminal allows the exposure of its own privacy information such as its own location to the monitoring terminal for performing the positioning service, the announcing terminal may broadcast the first information. For the monitoring terminal, after receiving the first information, it may establish a PC5 link with the announcing terminal.

For example, for the monitoring terminal, after receiving the first information, it may verify whether it is allowed to expose its own privacy information to the announcing terminal for performing the positioning service. In a case where the monitoring terminal verifies that it is allowed to expose its own privacy information to the announcing terminal for performing the positioning service, it establishes a PC5 link with the announcing terminal.

For another example, for the monitoring terminal, after receiving the first information, it may determine whether it is allowed to authorize the positioning service with the announcing terminal. In a case where the monitoring terminal authorizes the positioning service with the announcing terminal, it may establish a PC5 link with the announcing terminal.

For another example, for the monitoring terminal, after receiving the first information, it may determine whether it is allowed to authorize the positioning service with the announcing terminal and verify whether it is allowed to expose its own privacy information to the announcing terminal for performing the positioning service. In a case where the monitoring terminal authorizes the positioning service with the announcing terminal and verifies that it is allowed to expose its own privacy information to the announcing terminal for performing the positioning service, it may establish a PC5 link with the announcing terminal.

Of course, for the monitoring terminal, there is no limitation on the sequence of implementation between determining whether the monitoring terminal is allowed to authorize the positioning service with the announcing terminal and verifying whether the monitoring terminal is allowed to expose its own privacy information to the announcing terminal for performing the positioning service. In other words, it is possible to first determine whether to authorize, and then perform privacy verification; or first perform privacy verification, and then determine whether to authorize; or determine whether to authorize and perform privacy verification at the same time, which is not limited in the present disclosure.

In some embodiments, the first phase includes the discovery phase of the SL communication between the first terminal and the second terminal. The first terminal may send the first information to a specific second terminal. It is understandable that the specific second terminal may be a second terminal that is authorized by the first terminal and/or allowed to perform the positioning service by privacy configuration rule. In this case, the first terminal may receive a response from the second terminal. The first terminal may be a discoverer terminal, and the second terminal may be a discoveree terminal.

For example, the discoverer terminal may determine the discoveree terminal that can be authorized to perform the positioning service. The discoverer terminal may authorize the discoveree terminal, indicating that the discoveree terminal is allowed to perform the positioning service with the discoverer terminal. The discoverer terminal may also verify based on the privacy configuration rule whether it is allowed to expose its own privacy information to the discoveree terminal for performing the positioning service. In a case where the discoveree terminal is authorized, and/or the discoverer terminal is allowed to expose its own privacy information to the discoveree terminal for performing the positioning service, the discoverer terminal may send the first information to the discoveree terminal. The first information may include a terminal identifier of the discoverer terminal, a terminal identifier of the discoveree terminal, an SL positioning service code, etc. For the discoveree terminal, after receiving the first information, the discoveree terminal may determine, based on the first information, whether it is allowed to authorize the discoverer terminal, and/or verify whether the discoveree terminal is allowed to expose its own privacy information to the discoverer terminal for performing the positioning service. That is, for the discoveree terminal, it needs to determine whether to authorize the discoverer terminal, and/or the discoveree terminal determines based on the privacy configuration rule whether it is allowed to expose its own privacy information to the discoverer terminal for performing the positioning service. In the case where the discoveree terminal authorizes the discoverer terminal, and/or the discoveree terminal determines based on the privacy configuration rule that it is allowed to expose its own privacy information to the discoverer terminal for performing the positioning service, the discoveree terminal may send a response to the discoverer terminal. For example, the discoveree terminal may send a response message, and the response message may include the terminal identifier of the discoverer terminal, the terminal identifier of the discoveree terminal, the ranging/SL positioning service code, etc. For the discoverer terminal, after receiving the response message, it may determine whether it matches the discoveree terminal. It may be understood as that the discoverer terminal may determine whether the response message it receives is sent by the second terminal that is expected to perform the positioning service. If matched, the discoverer terminal may establish a PC5 link with the discoveree terminal.

In some embodiments, the first phase includes a PC5 link establishment phase of SL communication between the first terminal and the second terminal. In this case, the first terminal and the second terminal may be terminals with V2X capability, and the first terminal and/or the second terminal may also be terminals with ProSe capability. Of course, for the case where the first terminal and/or the second terminal are terminals with ProSe capability, it may be that authorization and/or verification based on the privacy configuration rule are not performed in the discovery phase, so that the first terminal may authorize the second terminal for the positioning service and determine based on the privacy configuration rule that the positioning service with the second terminal is allowed, in the PC5 link establishment phase of SL communication between the first terminal and the second terminal.

For example, the first terminal may determine which second terminal is allowed to perform the positioning service with the first terminal. The first terminal may authorize the second terminal that is allowed to perform the positioning service with the first terminal, to indicate that the first terminal expects to perform the positioning service with the second terminal. The first terminal may also verify, based on the privacy configuration rule, whether it is allowed to expose its own privacy information to the second terminal for performing the positioning service. In a case where the second terminal is authorized, and/or the first terminal is allowed to expose its own privacy information to the second terminal for performing the positioning service, the first terminal may send the first information to the second terminal. The first information may include a terminal identifier of the first terminal, an SL positioning service code, etc. For the second terminal, after receiving the first information, the second terminal may determine, based on the first information, whether the first terminal is authorized by the second terminal, and/or verify whether the second terminal is allowed to expose its own privacy information to the first terminal for performing the positioning service. That is, for the second terminal, it needs to determine whether to authorize the first terminal, and/or the second terminal determines based on the privacy configuration rule whether it is allowed to expose its own privacy information to the first terminal for performing the positioning service. In the case where the second terminal authorizes the first terminal, and/or the second terminal determines based on the privacy configuration rule that it is allowed to expose its own privacy information to the first terminal for performing the positioning service, the second terminal may send a direct security mode command to the first terminal. For the first terminal, after receiving the direct security mode command, it may send a direct security mode completion message to the second terminal. In addition, the first terminal may also receive a direct communication acceptance message sent by the second terminal.

For another example, the first terminal may send the first information to the second terminal. The first information may include a terminal identifier of the first terminal, an SL positioning service code, etc. For the second terminal, after receiving the first information, it may determine based on the first information whether the first terminal is authorized by the second terminal, and/or verify whether the second terminal is allowed to expose its own privacy information to the first terminal for performing the positioning service. In other words, for the second terminal, it needs to determine whether to authorize the first terminal, and/or the second terminal determines based on the privacy configuration rule whether it is allowed to expose its own privacy information to the first terminal for performing the positioning service. In the case where the second terminal authorizes the first terminal, and the second terminal determines based on the first rule that the positioning service with the first terminal is allowed, the second terminal may send a direct security mode command to the first terminal. For the first terminal, after receiving the direct security mode command, the first terminal may determine whether the second terminal is authorized by the first terminal, and/or verify whether the first terminal is allowed to expose its own privacy information to the second terminal for performing the positioning service. In the case where the second terminal is authorized, and/or the first terminal determines based on the privacy configuration rule that it is allowed to expose its own privacy information to the second terminal for performing the positioning service, the first terminal sends a direct security mode completion message to the second terminal. Further, the first terminal may also receive a direct communication acceptance message sent by the second terminal.

It may be seen from the above examples that, in the case where the first phase includes the PC5 link establishment phase of the SL communication between the first terminal and the second terminal, S12 may be performed before S11.

In some embodiments, the first phase includes a PC5 link modification phase of SL communication between the first terminal and the second terminal. In this case, the first terminal and the second terminal may be terminals with V2X capability. The first terminal and/or the second terminal may also be terminals with ProSe capability. Of course, for the case where the first terminal and/or the second terminal are terminals with ProSe capability, it may be that authorization and/or verification based on the privacy configuration rule are not performed in the discovery phase, so that the first terminal may authorize the second terminal for the positioning service and determine based on the privacy configuration rule that the positioning service with the second terminal is allowed, in the PC5 link modification phase of the SL communication between the first terminal and the second terminal.

For example, the first terminal may determine which second terminal is allowed to perform the positioning service with the first terminal. The first terminal may authorize the second terminal that is allowed to perform the positioning service with the first terminal, to indicate that the first terminal expects to perform the positioning service with the second terminal. The first terminal may also verify, based on the privacy configuration rule, whether it is allowed to expose its own privacy information to the second terminal for performing the positioning service. In a case where the second terminal is authorized, and/or the first terminal is allowed to expose its own privacy information to the second terminal for performing the positioning service, the first terminal may send the first information to the second terminal. The first information may include a terminal identifier of the first terminal, an SL positioning service code, etc. The first information may be, for example, a link modification request. For the second terminal, after receiving the first information, the second terminal may determine, based on the first information, whether the first terminal is authorized by the second terminal, and/or verify whether the second terminal is allowed to expose its own privacy information to the first terminal for performing the positioning service. That is, for the second terminal, it needs to determine whether to authorize the first terminal, and/or the second terminal determines based on the privacy configuration rule whether it is allowed to expose its own privacy information to the first terminal for performing the positioning service. In the case where the second terminal authorizes the first terminal, and/or the second terminal determines based on the privacy configuration rule that it is allowed to expose its own privacy information to the first terminal for performing the positioning service, the second terminal may send a link modification reception message to the first terminal.

It may be understood that in various embodiments of the present disclosure, the first rule adopted by each terminal may be a first rule associated with the terminal. For example, the first terminal adopts the first rule associated with the first terminal for authorization and/or verification; the second terminal adopts the first rule associated with the second terminal for authorization and/or verification. In other words, the authorization rule adopted by the first terminal is associated with the first terminal, and this authorization rule is applicable to the first terminal. The authorization rule associated with the first terminal may be the same as, partially the same as, or completely different from the authorization rule associated with the second terminal, which are not limit in the present disclosure. Of course, with respect to the privacy configuration rule, the privacy configuration rule adopted by the first terminal is associated with the first terminal, and this privacy configuration rule is applicable to the first terminal. The privacy configuration rule associated with the first terminal may be the same as, partially the same as, or completely different from the privacy configuration rule associated with the second terminal, which are not limit in the present disclosure.

In the present disclosure, it may be determined based on the first rule in the first phase of the SL communication between the first terminal and the second terminal that the corresponding positioning service with the second terminal is allowed, so that the privacy policy for the positioning service may be executed in network coverage and/or out of network coverage, thereby avoiding the exposure of respective privacy information of some terminals that require privacy protection, and improving the security of the communication process.

In the SL communication method according to embodiments of the present disclosure, the first rule includes at least one of: an authorization rule for whether the second terminal is allowed to perform the positioning service with the first terminal; or a privacy configuration rule for whether the first terminal is allowed to perform the positioning service with the second terminal.

In some embodiments, the first rule may include the authorization rule for whether the second terminal is allowed to perform the positioning service with the first terminal.

It may be understood that the authorization rule is used to indicate which second terminal is allowed to perform the positioning service with the first terminal, so that the first terminal may determine to perform the positioning service with such second terminal. It may also be considered that the first terminal may determine, based on the authorization rule, which second terminal is not allowed to perform the positioning service with the first terminal, so that the first terminal will avoid performing the positioning service with such second terminal.

In some embodiments, the authorization rule may include a rule allowing authorization for the second terminal.

For example, in the case where the authorization rule includes the rule allowing authorization for the second terminal, for a second terminal appearing in the rule, it is determined that authorization is allowed for such second terminal.

For example, the above rule may be implemented in the form of an authorization whitelist.

In some embodiments, the authorization rule may include a rule prohibiting authorization for the second terminal.

For example, in the case where the authorization rule includes the rule prohibiting authorization for the second terminal, for a second terminal appearing in the rule, it is determined that authorization for such second terminal is prohibited.

For example, the above rule may be implemented in the form of an authorization blacklist.

In some embodiments, the first rule may include the privacy configuration rule for whether the first terminal is allowed to perform the positioning service with the second terminal.

It may be understood that the privacy configuration rule is used to indicate which second terminal the first terminal is allowed to expose its own privacy information to for performing the positioning service, so that the first terminal may determine to perform the positioning service with such second terminal. It may also be considered that the first terminal may determine based on the privacy configuration rule which second terminal the first terminal is not allowed to expose its own privacy information to for performing the positioning service, so that the first terminal will avoid performing the positioning service with such second terminal.

In some embodiments, the privacy configuration rule may include a rule that the first terminal is allowed to expose its own private information to the second terminal for performing the positioning service.

For example, in the case where the privacy configuration rule includes the rule that the first terminal is allowed to expose its own private information to the second terminal for performing the positioning service, for a second terminal appearing in the rule, it is determined that the positioning service is allowed to be performed for such second terminal.

For example, the above rule may be implemented in the form of a privacy configuration whitelist.

In some embodiments, the privacy configuration rule may include a rule that the first terminal is prohibited to expose its own privacy information to the second terminal for performing the positioning service.

For example, in the case where the privacy configuration rule includes the rule that the first terminal is prohibited to expose its own privacy information to the second terminal for performing the positioning service, for a second terminal appearing in the rule, it is determined that the positioning service is prohibited for such second terminal, that is, the positioning service is not allowed to be performed for such second terminal.

For example, the above rule may be implemented in the form of a privacy configuration blacklist.

In the present disclosure, it is determined based on the first rule whether the corresponding positioning service with the second terminal is allowed, so that the privacy policy for the positioning service may be executed in network coverage and/or out of network coverage, thereby avoiding the exposure of respective privacy information of some terminals that require privacy protection, and improving the security of the communication process.

In the SL communication method according to embodiments of the present disclosure, the first rule includes the privacy configuration rule for whether the first terminal is allowed to perform the positioning service with the second terminal. S11 of determining based on the first rule that the positioning service with the second terminal is allowed may include: determining based on the privacy configuration rule that the first terminal is allowed to perform the positioning service with the second terminal.

In some embodiments, the first rule may include the privacy configuration rule for whether the first terminal is allowed to perform the positioning service with the second terminal. It may be understood that the privacy configuration rule may be used to determine whether the first terminal is allowed to expose its own private information to the second terminal for performing the positioning service.

In some embodiments, in the case where the first rule includes the privacy configuration rule for whether the first terminal is allowed to expose its own private information to the second terminal for performing the positioning service, the first terminal may determine based on the privacy configuration rule that the first terminal is allowed to perform the positioning service with the second terminal.

For example, the privacy configuration rule includes a rule that the first terminal is allowed to expose its own private information to the second terminal for performing the positioning service, and this rule may be implemented in the form of a whitelist. The first terminal determines whether the second terminal appears in the whitelist, and then determines whether the positioning service is allowed to be performed for the second terminal. For example, if the second terminal appears in the whitelist, it may be determined that the positioning service is allowed to be performed for the second terminal. For another example, if the second terminal does not appear in the whitelist, it may be determined that the positioning service is not allowed to be performed for the second terminal.

For another example, the privacy configuration rule includes the rule that the first terminal is prohibited to expose its own privacy information to the second terminal for performing the positioning service, and this rule may be implemented in the form of a blacklist. The first terminal determines whether the second terminal appears in the blacklist, and then determines whether the positioning service is allowed to be performed for the second terminal. For example, if the second terminal does not appear in the blacklist, it may be determined that the positioning service is allowed to be performed for the second terminal. For another example, if the second terminal appears in the blacklist, it may be determined that the positioning service is not allowed to be performed for the second terminal.

In the present disclosure, it is determined based on the privacy configuration rule whether the corresponding positioning service with the second terminal is allowed, so that the privacy policy for the positioning service may be executed in network coverage and/or out of network coverage, thereby avoiding the exposure of respective privacy information of some terminals that require privacy protection, and improving the security of the communication process.

In the SL communication method according to embodiments of the present disclosure, the first rule includes the authorization rule for whether the second terminal is allowed to perform the positioning service with the first terminal. S11 of determining based on the first rule that the positioning service with the second terminal is allowed includes: authorizing the second terminal for the positioning service based on the authorization rule.

In some embodiments, the first rule includes the authorization rule for whether the second terminal is allowed to perform the positioning service with the first terminal.

In some embodiments, in the case where the first rule includes the authorization rule for whether the second terminal is allowed to perform the positioning service with the first terminal, the first terminal may also authorize the second terminal for the positioning service.

For example, in the case where the first rule includes the authorization rule for whether the second terminal is allowed to perform the positioning service with the first terminal, the first terminal determines which second terminal is allowed to perform the positioning service with the first terminal. The first terminal may authorize such second terminal.

For example, the first terminal may authorize certain specific second terminals for the positioning service. For example, the first terminal may authorize second terminals corresponding to certain terminal IDs for the positioning service. For another example, the first terminal may authorize second terminals corresponding to certain terminal roles for the positioning service.

In some embodiments, in a case where the first rule includes the authorization rule for whether the first terminal is allowed to authorize the second terminal, the first terminal may determine based on the authorization rule that the first terminal allows the positioning service with the second terminal.

For example, the authorization rule includes a rule that authorization to the second terminal is allowed, and this rule may be embodied in the form of a whitelist. The first terminal determines whether the second terminal appears in the whitelist, and then determines whether authorization to the second terminal is allowed. For example, if the second terminal appears in the whitelist, it may be determined that authorization to the second terminal is allowed. For another example, if the second terminal does not appear in the whitelist, it may be determined that authorization to the second terminal is not allowed.

For another example, the authorization rule includes a rule that authorization to the second terminal is prohibited, and this rule may be embodied in the form of a blacklist. The first terminal determines whether the second terminal appears in the blacklist, and then determines whether authorization to the second terminal is allowed. For example, if the second terminal does not appear in the blacklist, it may be determined that authorization to the second terminal is allowed. For another example, if the second terminal appears in the blacklist, it may be determined that authorization to the second terminal is not allowed.

It is understood that the verification of the authorization rule may be performed based on a terminal ID and/or role of a terminal, such as verifying whether the terminal ID of the second terminal matches a corresponding terminal ID in the authorization rule, and/or verifying whether the terminal role of the second terminal matches a corresponding terminal role in the authorization rule.

In the present disclosure, it is determined based on the authorization rule whether the corresponding positioning service with the second terminal is allowed, so that the privacy policy for the positioning service may be executed in network coverage and/or out of network coverage, thereby avoiding the exposure of respective privacy information of some terminals that require privacy protection, and improving the security of the communication process.

In the SL communication method according to embodiments of the present disclosure, the first rule is based on network device configuration; and/or the first rule is stored in the first terminal.

In some embodiments, the first rule may be based on the network device configuration.

For example, the first terminal receives the first rule sent by the network device.

For another example, the first terminal requests the first rule from the network device. For example, the first terminal sends information for requesting the first rule to the network device. After receiving the information for requesting the first rule, the network device may send information for indicating the first rule to the first terminal. The first terminal may determine the first rule based on the received information for indicating the first rule.

In some embodiments, the first rule may be stored in the first terminal.

For example, the first rule may be pre-stored in the first terminal.

In some embodiments, the first rule may be based on the network device configuration, and the first rule may be stored in the first terminal.

For example, in the case where the first terminal is in network coverage, the first rule may be configured by the network device. In the case where the first terminal is out of network coverage, the first rule may be determined based on those pre-stored.

Of course, the first rule, after determined by the first terminal based on the network device configuration, may be stored in the first terminal. Alternatively, the first rule that has been stored may also be updated, which is not limited in the present disclosure.

In some embodiments, the first rule mentioned in various embodiments of the present disclosure may be specified by a protocol and stored in the first terminal.

The present disclosure provides a variety of ways to determine the first rule, so as to determine based on the first rule that the corresponding positioning service with the second terminal is allowed, so that the privacy policy for the positioning service may be executed in network coverage and/or out of network coverage, thereby avoiding the exposure of respective privacy information of some terminals that require privacy protection, and improving the security of the communication process.

Based on the same concept, the present disclosure also provides an SL communication method performed by a second terminal.

FIG. 3 is a flowchart showing another SL communication method according to an example embodiment. As shown in FIG. 3, the method is performed by a second terminal and may include the following steps:

In step S21, first information is received.

In some embodiments, the second terminal may receive the first information. The first information is used to instruct the second terminal to perform the positioning service.

For example, the second terminal may receive the first information sent by the first terminal. The first information is used to instruct the second terminal to perform the positioning service. The second terminal may perform the positioning service based on the first information, so as to enable the first terminal to accurately determine its own location. For example, the second terminal may establish a communication link with the first terminal and send positioning information to the first terminal, to enable the first terminal to determine its own location based on the positioning information shared by the second terminal.

For example, in a case where the first terminal does not need to receive a response from the second terminal in a discovery phase, the first terminal may be an announcing terminal, and the second terminal may be a monitoring terminal.

For another example, in a case where the first terminal needs to receive a response from the second terminal in the discovery phase, the first terminal may be a discoverer terminal, and the second terminal may be a discoveree terminal.

In some embodiments, the first information may include a terminal identifier of the first terminal and an SL positioning service code. The identifier may be an ID or an index. In some cases, the first information may also include any possible information such as a terminal identifier of the second terminal.

For example, the identifier of the first terminal can directly and uniquely indicate the first terminal. For another example, the identifier of the first terminal can indicate a terminal role of the first terminal. It is understandable that different terminal roles may be considered as different terminal types or different terminal categories. Of course, the terminal role may also be understood as a kind of identity information of the terminal.

For example, the terminal role may include: one or more of a target terminal, a located terminal, or a reference terminal. The target terminal may be considered as a terminal that wishes to determine its own location. The located terminal may determine the location of the target terminal by using SL positioning. The location of the located terminal is known, for example, its absolute location may be obtained through positioning of the Uu interface. The located terminal may be considered as a special reference terminal, for example, it may be considered as an SL reference terminal. The SL reference terminal is able to send and/or receive reference signals for positioning and providing positioning-related information via SL, and support positioning of the target terminal based on such reference signals.

Of course, the terminal role may include more possible situations, and may be arbitrarily added, deleted or modified as required, which is not limited in the present disclosure.

In step S22, it is determined based on a first rule that the positioning service with the first terminal is allowed.

In some embodiments, when the second terminal receives the first information, the second terminal may determine based on the first rule that the positioning service with the first terminal is allowed. The second terminal may be a terminal for providing the positioning service. The first rule may be used to indicate whether the first terminal is allowed to perform the positioning service with the second terminal.

For example, the second terminal may determine based on the first rule whether it may perform the positioning service with the first terminal. If the second terminal may perform the positioning service with the first terminal, a PC5 link may be established with the first terminal to send positioning information of the second terminal, so that the first terminal may determine its own location and realize positioning of the first terminal.

In some embodiments, the first rule may specify which first terminal the second terminal is allowed to perform the positioning service with. For another example, the first rule may specify which first terminal the second terminal is not allowed to perform the positioning service with.

For example, the first rule may include a privacy configuration rule. The first rule may also include an authorization rule. The first rule may be requested and obtained by the second terminal from the network device. The first rule may be sent by the network device to the second terminal. The first rule may also be pre-stored in the second terminal. The present disclosure does not limit how the second terminal determines the first rule.

For example, the second terminal may determine according to the authorization rule which first terminal is allowed to perform the positioning service with the second terminal. In the case where it is determined that some first terminals are allowed to perform the positioning service with the second terminal, the second terminal may establish a PC5 link with the first terminal and send positioning information of the second terminal, so that the first terminal may determine its own location and achieve the positioning of the first terminal.

For another example, the second terminal may determine based on the privacy configuration rule whether the second terminal is allowed to expose its own privacy information to a certain first terminal for performing the positioning service. In the case where the privacy configuration rule allows the second terminal to expose its own privacy information to some first terminals for performing the positioning service, a PC5 link may be established with the first terminal to send positioning information of the second terminal. This allows the first terminal to determine its own location and achieve positioning of the first terminal.

For another example, the second terminal may determine based on the authorization rule which first terminal is allowed to perform the positioning service with the second terminal, and the second terminal may determine based on the privacy configuration rule whether the second terminal is allowed to expose its own privacy information to a certain first terminal for performing the positioning service. In the case where it is determined based on the authorization rule that a certain first terminal is allowed to perform the positioning service with the second terminal, and the second terminal is allowed to expose its own privacy information to the first terminal for performing the positioning service, the second terminal may establish a PC5 link with the first terminal to send the positioning information of the second terminal, so that the first terminal may determine its own location and achieve the positioning of the first terminal.

In some embodiments, the above steps S21 and S22 may be performed in the discovery phase of SL communication between the first terminal and the second terminal.

In some embodiments, the above steps S21 and S22 may be performed in a PC5 link establishment phase of SL communication between the first terminal and the second terminal, or in a PC5 link modification phase of SL communication between the first terminal and the second terminal.

For example, for the case where the first terminal and/or the second terminal are terminals with V2X capability, there is no discovery phase in the SL communication between the first terminal and the second terminal.

For another example, for the case where the first terminal and the second terminal are terminals with ProSe capability, if the above steps S21 and S22 are not performed in the discovery phase of the SL communication between the first terminal and the second terminal, these steps may be performed in the PC5 link establishment phase or the PC5 link modification phase of the SL communication between the first terminal and the second terminal.

In the present disclosure, it is determined based on the first rule that a corresponding positioning service with the first terminal is allowed, so that the privacy policy for the positioning service may be executed in network coverage and/or out of network coverage, thereby avoiding the exposure of respective privacy information of some terminals that need privacy protection, and improving the security of the communication process.

In the SL communication method according to embodiments of the present disclosure, the S22 of determining based on the first rule that the positioning service with the first terminal is allowed may include: determining based on the first rule that the positioning service with the first terminal is allowed, in a first phase of SL communication between the first terminal and the second terminal.

In some embodiments, in the first phase of the SL communication between the first terminal and the second terminal, the second terminal may determine based on a first rule that the positioning service with the first terminal is allowed.

For example, in the first phase of the SL communication between the first terminal and the second terminal, the second terminal may determine based on the privacy configuration rule that it is allowed to expose its own privacy information to the first terminal for performing the positioning service. It may be understood that the second terminal is allowed to expose its own privacy information to the first terminal, which may be considered as that the second terminal is allowed to send its own private information (such as location information, identity information and other privacy-related information) to the first terminal.

For example, in the first phase of the SL communication between the first terminal and the second terminal, the second terminal may determine, based on the authorization rule, to authorize the first terminal for the positioning service.

In some embodiments, the first phase may include at least one of: a discovery phase of SL communication between the first terminal and the second terminal; a PC5 link establishment phase of SL communication between the first terminal and the second terminal; or a PC5 link modification phase of SL communication between the first terminal and the second terminal.

It may be understood that for various embodiments of the first phase, reference may be made to the description of corresponding embodiments with respect to the first terminal and associated embodiments, which will not be elaborated here.

In the present disclosure, it may be determined based on the first rule in the first phase of the SL communication between the first terminal and the second terminal that the corresponding positioning service with the first terminal is allowed, so that the privacy policy for the positioning service may be executed in network coverage and/or out of network coverage, thereby avoiding the exposure of respective privacy information of some terminals that require privacy protection, and improving the security of the communication process.

In the SL communication method according to embodiments of the present disclosure, the first rule includes at least one of: an authorization rule for whether the first terminal is allowed to perform the positioning service with the second terminal; or a privacy configuration rule for whether the second terminal is allowed to perform the positioning service with the first terminal.

In some embodiments, the first rule may include the authorization rule for whether the first terminal is allowed to perform the positioning service with the second terminal.

It may be understood that the authorization rule is used to indicate which first terminal is allowed to perform the positioning service with the second terminal, so that the second terminal may determine to perform the positioning service with such first terminal. It may also be considered that the second terminal may determine, based on the authorization rule, which first terminal is not allowed to perform the positioning service with the second terminal, so that the second terminal will avoid performing the positioning service with such first terminal.

In some embodiments, the authorization rule may include a rule allowing authorization for the first terminal.

For example, in the case where the authorization rule includes the rule allowing authorization for the first terminal, for a first terminal appearing in the rule, it is determined that authorization is allowed for such first terminal.

For example, the above rule may be implemented in the form of an authorization whitelist.

In some embodiments, the authorization rule may include a rule prohibiting authorization for the first terminal.

For example, in the case where the authorization rule includes the rule prohibiting authorization for the first terminal, for a first terminal appearing in the rule, it is determined that authorization for such first terminal is prohibited.

For example, the above rule may be implemented in the form of an authorization blacklist.

In some embodiments, the first rule may include the privacy configuration rule for whether the second terminal is allowed to perform the positioning service with the first terminal.

It may be understood that the privacy configuration rule is used to indicate which first terminal the second terminal is allowed to expose its own privacy information to for performing the positioning service, so that the second terminal may determine to perform the positioning service with such first terminal. It may also be considered that the second terminal may determine based on the privacy configuration rule which first terminal the second terminal is not allowed to expose its own privacy information to for performing the positioning service, so that the second terminal will avoid performing the positioning service with such first terminal.

In some embodiments, the privacy configuration rule may include a rule that the second terminal is allowed to expose its own private information to the first terminal for performing the positioning service.

For example, in the case where the privacy configuration rule includes the rule that the second terminal is allowed to expose its own private information to the first terminal for performing the positioning service, for a first terminal appearing in the rule, it is determined that the positioning service is allowed to be performed for such first terminal.

For example, the above rule may be implemented in the form of a privacy configuration whitelist.

In some embodiments, the privacy configuration rule may include a rule that the second terminal is prohibited to expose its own privacy information to the first terminal for performing the positioning service.

For example, in the case where the privacy configuration rule includes the rule that the second terminal is prohibited to expose its own privacy information to the first terminal for performing the positioning service, for a first terminal appearing in the rule, it is determined that the positioning service is prohibited for such first terminal, that is, the positioning service is not allowed to be performed for such first terminal.

For example, the above rule may be implemented in the form of a privacy configuration blacklist.

In the present disclosure, it is determined based on the first rule whether the corresponding positioning service with the first terminal is allowed, so that the privacy policy for the positioning service may be executed in network coverage and/or out of network coverage, thereby avoiding the exposure of respective privacy information of some terminals that require privacy protection, and improving the security of the communication process.

In the SL communication method according to embodiments of the present disclosure, the first rule includes the privacy configuration rule for whether the second terminal is allowed to perform the positioning service with the first terminal. S22 of determining based on the first rule that the positioning service with the first terminal is allowed may include: determining based on the privacy configuration rule that the second terminal is allowed to perform the positioning service with the first terminal.

In some embodiments, the first rule includes the privacy configuration rule for whether the second terminal is allowed to perform the positioning service with the first terminal. It may be understood that the privacy configuration rule may be used to determine whether the second terminal is allowed to expose its own private information to the first terminal for performing the positioning service.

In some embodiments, in the case where the first rule includes the privacy configuration rule for whether the second terminal is allowed to expose its own private information to the first terminal for performing the positioning service, the second terminal may determine based on the privacy configuration rule that the second terminal is allowed to perform the positioning service with the first terminal.

For example, the privacy configuration rule includes a rule that the second terminal is allowed to expose its own private information to the first terminal for performing the positioning service, and this rule may be implemented in the form of a whitelist. The second terminal determines whether the first terminal appears in the whitelist, and then determines whether the positioning service is allowed to be performed for the first terminal. For example, if the first terminal appears in the whitelist, it may be determined that the positioning service is allowed to be performed for the first terminal. For another example, if the first terminal does not appear in the whitelist, it may be determined that the positioning service is not allowed to be performed for the first terminal.

For another example, the privacy configuration rule includes a rule that the second terminal is prohibited to expose its own privacy information to the first terminal for performing the positioning service, and this rule may be implemented in the form of a blacklist. The second terminal determines whether the first terminal appears in the blacklist, and then determines whether the positioning service is allowed to be performed for the first terminal. For example, if the first terminal does not appear in the blacklist, it may be determined that the positioning service is allowed to be performed for the first terminal. For another example, if the first terminal appears in the blacklist, it may be determined that the positioning service is not allowed to be performed for the first terminal.

In the present disclosure, it is determined based on the privacy configuration rule whether the corresponding positioning service with the first terminal is allowed, so that the privacy policy for the positioning service may be executed in network coverage and/or out of network coverage, thereby avoiding the exposure of respective privacy information of some terminals that require privacy protection, and improving the security of the communication process.

In the SL communication method according to embodiments of the present disclosure, the first rule includes the authorization rule for whether the first terminal is allowed to perform the positioning service with the second terminal. S22 of determining based on the first rule that the positioning service with the first terminal is allowed includes: authorizing the first terminal for the positioning service based on the authorization rule.

In some embodiments, the first rule includes the authorization rule for whether the first terminal is allowed to perform the positioning service with the second terminal.

In some embodiments, in the case where the first rule includes the authorization rule for whether the first terminal is allowed to perform the positioning service with the second terminal, the second terminal may also authorize the first terminal for the positioning service.

For example, in the case where the first rule includes the authorization rule for whether the first terminal is allowed to perform the positioning service with the second terminal, the second terminal determines which first terminal is allowed to perform the positioning service with the second terminal. The second terminal may authorize such first terminal.

For example, the second terminal may authorize certain specific first terminals for the positioning service. For example, the second terminal may authorize first terminals corresponding to certain terminal IDs for the positioning service. For another example, the second terminal may authorize first terminals corresponding to certain terminal roles for the positioning service.

In some embodiments, in a case where the first rule includes the authorization rule for whether the second terminal is allowed to authorize the first terminal, the second terminal may determine based on the authorization rule that the second terminal allows the positioning service with the first terminal.

For example, the authorization rule includes a rule that authorization to the first terminal is allowed, and this rule may be embodied in the form of a whitelist. The second terminal determines whether the first terminal appears in the whitelist, and then determines whether authorization to the first terminal is allowed. For example, if the first terminal appears in the whitelist, it may be determined that authorization to the first terminal is allowed. For another example, if the first terminal does not appear in the whitelist, it may be determined that authorization to the first terminal is not allowed.

For another example, the authorization rule includes a rule that authorization to the first terminal is prohibited, and this rule may be embodied in the form of a blacklist. The second terminal determines whether the first terminal appears in the blacklist, and then determines whether authorization to the first terminal is allowed. For example, if the first terminal does not appear in the blacklist, it may be determined that authorization to the first terminal is allowed. For another example, if the first terminal appears in the blacklist, it may be determined that authorization to the first terminal is not allowed.

It is understood that the verification of the authorization rule may be performed based on a terminal ID and/or role of a terminal, such as verifying whether the terminal ID of the second terminal matches a corresponding terminal ID in the authorization rule, and/or verifying whether the terminal role of the second terminal matches a corresponding terminal role in the authorization rule.

In the present disclosure, it is determined based on the authorization rule whether the corresponding positioning service with the first terminal is allowed, so that the privacy policy for the positioning service may be executed in network coverage and/or out of network coverage, thereby avoiding the exposure of respective privacy information of some terminals that require privacy protection, and improving the security of the communication process.

In the SL communication method according to embodiments of the present disclosure, the first rule is based on network device configuration; and/or the first rule is stored in the second terminal.

It can be understood that for various embodiments of how to configure the first rule, reference may be made to the description of the corresponding embodiments with respect to the first terminal and associated embodiments, which will not be elaborated here.

The present disclosure provides a variety of ways to determine the first rule, so as to determine based on the first rule that the corresponding positioning service with the first terminal is allowed, so that the privacy policy for the positioning service may be executed in network coverage and/or out of network coverage, thereby avoiding the exposure of respective privacy information of some terminals that require privacy protection, and improving the security of the communication process.

Technical solutions of the present disclosure will be described below in conjunction with more specific embodiments.

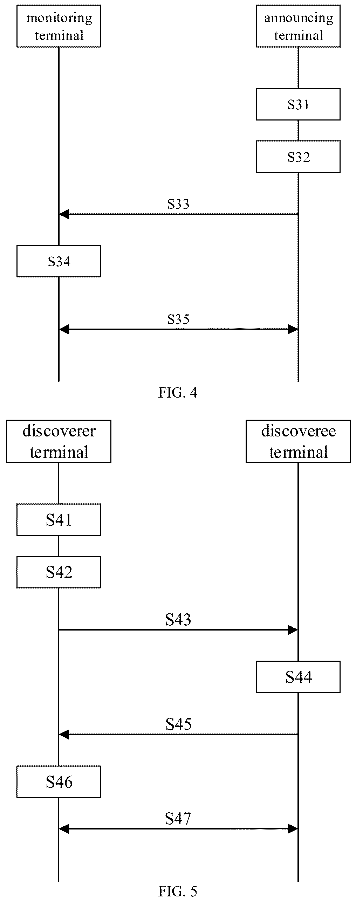

In some embodiments, FIG. 4 is a schematic diagram showing SL communication interaction according to an example embodiment. As shown in FIG. 4, the first terminal may be an announcing terminal, and the second terminal may be a monitoring terminal. For the announcing terminal and/or the monitoring terminal, an execution model A may be configured to implement the SL positioning service. For example, it may be performed in the discovery phase of SL communication between the first terminal and the second terminal. The method may include the following steps:

In step S31, it is triggered to announce a terminal role for the SL positioning service.

For example, the announcing terminal is triggered by a network device or an application to announce the role of the announcing terminal for ranging or SL positioning service. The ranging or SL positioning service may be identified and determined by a specific SL or positioning service code.

For example, the role of the announcing terminal may be an SL positioning server terminal. The SL positioning server terminal may provide service determination, auxiliary data allocation and/or location calculation functions for SL positioning and ranging-based services. The SL positioning server terminal interacts with other UEs via PC5 if necessary to determine the ranging/SL positioning service, allocate auxiliary data and calculate the location of the target terminal. Of course, if the relevant functions are supported, the target terminal or SL reference terminal (also referred to as located terminal) may serve as the SL positioning server terminal.

In step S32, the privacy configuration rule is verified.

For example, before sending a broadcast announcement message, the announcing terminal may check its privacy configuration rule and/or authorization rule to verify whether the privacy configuration of the announcing terminal allows SL positioning with the monitoring terminal. It is understandable that performing SL positioning is similar to the concept of performing the SL positioning service, the description of performing the positioning service, etc., which may be used interchangeably in various embodiments of the present disclosure, and is not limited in the present disclosure.

For example, it may be determined based on the authorization rule whether the role of the monitoring terminal is the target terminal. In the case where the role of the monitoring terminal is the target terminal, the monitoring terminal is authorized. It may be understood that the role of the announcing terminal may be a located terminal or an SL positioning server terminal. Of course, verification of authorization may also be performed based on the terminal ID.

In step S33, the broadcast announcement message is sent.

For example, if the privacy configuration rule of the announcing terminal passes, and/or the authorization rule is to authorize the monitoring terminal, the announcing terminal may send the broadcast announcement message. The broadcast announcement message may include an ID or role of the announcing terminal, an SL positioning service code, etc.

In step S34, it is determined whether the announcing terminal matches an expected terminal, and the privacy configuration rule and/or authorization rule are verified.

For example, after receiving the broadcast announcement message, the monitoring terminal may determine whether the announcing terminal matches the expected terminal. For example, it may be determined whether the terminal ID of the announcing terminal matches an expected terminal ID, or whether the terminal role of the announcing terminal matches an expected terminal role, if yes, the monitoring terminal checks its privacy configuration rule and/or authorization rule to verify whether the privacy setting of the monitoring terminal allows SL positioning with the announcing terminal, and whether authorization to the announcing terminal is allowed.

In step S35, a PC5 link is established.

For example, in S34, if the privacy configuration rule of the monitoring terminal passes, and/or the authorization rule is to authorize the monitoring terminal, the monitoring terminal may establish a PC5 unicast link with the announcing terminal to facilitate subsequent positioning of the target terminal.

Of course, it is understandable that the specific implementation process of each step in FIG. 4 may refer to the description of corresponding embodiments of the first terminal and/or the second terminal and their associated embodiments, which will not be elaborated again here.

In some embodiments, FIG. 5 is a schematic diagram showing another SL communication interaction according to an example embodiment. As shown in FIG. 5, the first terminal may be a discoverer terminal, and the second terminal may be a discoveree terminal. For the discoverer terminal and/or the discoveree terminal, an execution model B may be configured to implement the SL positioning service. For example, it may be performed during the discovery phase of the SL communication between the first terminal and the second terminal. The method may include the following steps:

In step S41, the discoverer terminal is triggered to discover a discoveree terminal for the SL positioning service.

For example, the discoverer terminal is triggered by a network device or an application to discover the discoveree terminal for ranging or SL positioning service. The ranging or SL positioning service may be identified and determined by a specific SL or positioning service code. The discoveree terminal may be represented by a terminal ID or a terminal role.

It is understandable that there may be one or more discoveree terminals.

In step S42, the discoverer terminal verifies the privacy configuration rule and/or the authorization rule.

For example, the discoverer terminal may check its privacy configuration rule to verify whether the privacy setting of the discoverer terminal allows the SL positioning with the discoveree terminal.

For example, the discoverer terminal may determine based on the authorization rule whether the role of the discoveree terminal is a located terminal. In the case where the role of the discoveree terminal is the located terminal, the discoveree terminal is authorized. It may be understood that the role of the discoverer terminal may be a target terminal. Of course, verification of authorization may also be performed based on the terminal ID.

In step S43, the discoverer terminal sends a broadcast request message.

For example, if the privacy configuration rule of the discoverer terminal passes, and/or the authorization rule is to authorize the discoveree terminal, the discoverer terminal may send the broadcast request message. The broadcast request message may include the ID or role of the discoverer terminal, the ID or role of the discoveree terminal, and the SL positioning service code, etc.

In step S44, the discoveree terminal determines whether the discoveree terminal matches an expected terminal, and verifies the privacy configuration rule and/or the authorization rule.

For example, after receiving the broadcast request message, the discoveree terminal may determine whether its own device matches the expected discoveree terminal in the broadcast request message, for example, it may determine whether the terminal ID of the discoveree terminal in the broadcast request message matches its own terminal ID, or whether the terminal role of the discoveree terminal in the broadcast request message matches its own terminal role, if yes, the discoveree terminal checks its privacy configuration rule and/or authorization rule to verify whether the privacy setting of the discoveree terminal allows the SL positioning with the discoverer terminal, and whether authorization to the discoverer terminal is allowed.

In step S45, the discoveree terminal sends a broadcast response message.

For example, if the privacy configuration rule of the discoveree terminal passes, and/or the authorization rule is to authorize the monitoring terminal, the broadcast response message may be sent to the discoverer terminal. The broadcast response message may include the ID or role of the discoverer terminal, the ID or role of the discoveree terminal, and the ranging/SL positioning service code, etc.

In step S46, the discoverer terminal determines whether the discoverer terminal matches an expected terminal.

For example, after receiving the broadcast response message, the discoverer terminal may determine whether its own device matches the expected discoverer terminal in the broadcast response message, for example, it may determine whether the terminal ID of the discoverer terminal in the broadcast response message matches its own terminal ID, or whether the terminal role of the discoverer terminal in the broadcast response message matches its own terminal role, if yes, S47 is performed.

In step S47, a PC5 link is established.

For example, the discoverer terminal may establish a PC5 unicast link with the discoveree terminal, to facilitate subsequent positioning of the target terminal.

Of course, it is understandable that the specific implementation process of each step in FIG. 4 may refer to the description of corresponding embodiments of the first terminal and/or the second terminal and their associated embodiments, which will not be elaborated again here.

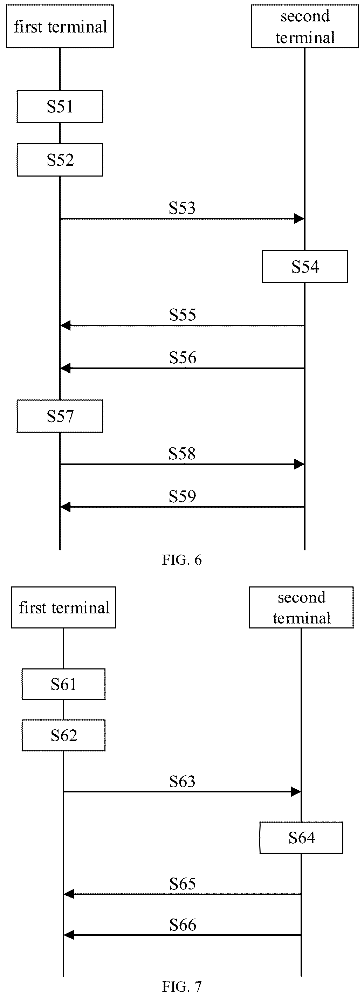

In some embodiments, FIG. 6 is a schematic diagram showing yet another SL communication interaction according to an example embodiment. As shown in FIG. 6, for example, it may be performed in the PC5 link establishment phase of the SL communication between the first terminal and the second terminal. The method may include the following steps:

In step S51, the first terminal is triggered to establish a link with the second terminal for SL positioning service.

For example, the first terminal is triggered by a network device or an application to establish a PC5 link with the second terminal for ranging or SL positioning service. The ranging or SL positioning service may be identified and determined by a specific SL or positioning service code. The second terminal may be represented by a terminal ID or a terminal role.

In step S52, the first terminal verifies the privacy configuration rule and/or the authorization rule.

For example, before sending a direct communication request (DCR), the first terminal may check its privacy configuration rule to verify whether the privacy setting of the first terminal allows the SL positioning with the second terminal.

For example, before sending the DCR, the first terminal may determine based on the authorization rule whether the role of the second terminal is a located terminal. In the case where the role of the second terminal is a located terminal, the second terminal is authorized. It may be understood that the role of the first terminal may be a target terminal. Of course, verification of authorization may also be performed based on the terminal ID.

It is understandable that step S52 is an optional step. If the first terminal does not perform step S52, step S57 may be performed.

In step S53, the first terminal sends the DCR.

For example, if the privacy configuration rule of the first terminal passes and/or the authorization rule is to authorize the second terminal, the first terminal may send the DCR. The DCR may include the ID or role of the first terminal, the SL positioning service code, etc.

In step S54, the second terminal verifies the privacy configuration rule and/or the authorization rule.

For example, after receiving the DCR, the second terminal may check its privacy configuration rule and/or authorization rule to verify whether the privacy setting of the second terminal allows SL positioning with the first terminal and whether authorization to the first terminal is allowed.

In step S55, a direct communication reject is sent.

For example, if it is verified in S54 that the privacy setting of the second terminal does not allow the SL positioning with the first terminal, or authorization to the first terminal is not allowed, the second terminal may send the direct communication reject to the first terminal to reject the establishment of a PC5 link with the first terminal.

In step S56, a direct security mode command is sent.

For example, if it is verified in S54 that the privacy setting of the second terminal allows the SL positioning with the first terminal, and authorization to the first terminal is allowed, the second terminal may send the direct security mode command to the first terminal to establish a PC5 link of security association with the first terminal.

Of course, if only the privacy setting is verified in S54, in the case where it is verified that the privacy setting of the second terminal allows the SL positioning with the first terminal, the second terminal may send the direct security mode command to the first terminal. Alternatively, if it is only determined in S54 whether to authorize the first terminal, in the case where authorization to the first terminal is allowed, the second terminal may send the direct security mode command to the first terminal.

In step S57, the first terminal verifies the privacy configuration rule and/or the authorization rule.

For example, after receiving the direct security mode command, if the first terminal does not perform step S52, then step S57 is performed. Of course, if the first terminal has already performed step S52, step S57 may be skipped, and step S58 may be performed directly.

It may be understood that the implementation process of step S57 is the same as that of step S52. For details, reference may be made to the corresponding description of step S52, which will not be elaborated again in the present disclosure.

It may be understood that step S57 is an optional step.

In step S58, the first terminal sends a direct security mode complete message.

For example, when the privacy configuration rule of the first terminal passes, and/or the authorization rule is to authorize the discoveree terminal, the direct security mode complete message may be sent to the second terminal to inform the second terminal.

In step S59, the second terminal sends a direct communication accept message.

For example, after receiving the direct security mode complete message, the second terminal may send the direct communication accept message to the first terminal. After the first terminal receives the direct communication accept message, the first terminal may establish a PC5 link with the second terminal.

In some embodiments, FIG. 7 is a schematic diagram of yet another SL communication interaction according to an example embodiment. As shown in FIG. 7, for example, it may be performed in the PC5 link modification phase of the SL communication between the first terminal and the second terminal. The method may include the following steps:

In step S61, the first terminal is triggered to modify a link with the second terminal for the SL positioning service.

For example, the first terminal is triggered by a network device or an application to modify the PC5 link with the second terminal for ranging or SL positioning service if the privacy configuration rule and/or authorization rule are updated. The ranging or SL positioning service may be identified and determined by a specific SL or positioning service code. The second terminal may be represented by a terminal ID or a terminal role.

In step S62, the first terminal verifies the privacy configuration rule and/or the authorization rule.

For example, before sending a link modification request, the first terminal may check its privacy configuration rule to verify whether the privacy setting of the first terminal allows SL positioning with the second terminal.

For example, before sending the link modification request, the first terminal may determine based on the authorization rule whether the role of the second terminal is a located terminal. In the case where the role of the second terminal is a located terminal, the first terminal authorizes the second terminal. It may be understood that the role of the first terminal may be a target terminal. Of course, verification of authorization may also be performed based on terminal ID.

In step S63, the first terminal sends the link modification request.

For example, if the privacy configuration rule of the first terminal passes, and/or the authorization rule is to authorize the second terminal, the first terminal may send the link modification request. The link modification request may include the ID or role of the first terminal, the SL positioning service code, etc.

In step S64, the second terminal verifies the privacy configuration rule and/or the authorization rule.

For example, after receiving the link modification request, the second terminal may check its privacy configuration rule and/or authorization rule to verify whether the privacy setting of the second terminal allows SL positioning with the first terminal and whether authorization to the first terminal is allowed.

In step S65, a link modification accept message is sent.

For example, if it is verified in S64 that the privacy setting of the second terminal allows the SL positioning with the first terminal, and authorization to the first terminal is allowed, the second terminal may send the link modification accept message to the first terminal to modify the PC5 link established with the first terminal.

In step S66, a link modification reject message is sent.

For example, if it is verified in S64 that the privacy setting of the second terminal does not allow the SL positioning with the first terminal, or authorization to the first terminal is not allowed, the second terminal may send the link modification reject message to the first terminal to reject modification of the PC5 link established with the first terminal.

It should be noted that those skilled in the art may understand that various implementations/embodiments involved in above embodiments of the present disclosure may be used in combination with the aforementioned embodiments or may be used independently. Whether used alone or in combination with the aforementioned embodiments, the implementation principle is similar. In the present disclosure, some embodiments are described in terms of implementations used together. Of course, those skilled in the art may understand that such examples are not limitative to embodiments of the present disclosure.

Based on the same concept, embodiments of the present disclosure also provide an SL communication apparatus and device.

It is understandable that in order to realize the above functions, the SL communication apparatus and device provided in embodiments of the present disclosure include corresponding hardware structures and/or software modules for the execution of each function. In combination with the units and algorithm steps of various examples disclosed in embodiments of the present disclosure, embodiments of the present disclosure may be implemented in the form of hardware or a combination of hardware and computer software. Whether a function is executed in the form of hardware or computer software driving hardware depends on the specific application and design constraints of the technical solution. Those skilled in the art may use different methods to implement the described functions for each specific application, but such implementation should not be considered to be beyond the scope of the technical solutions of embodiments of the present disclosure.

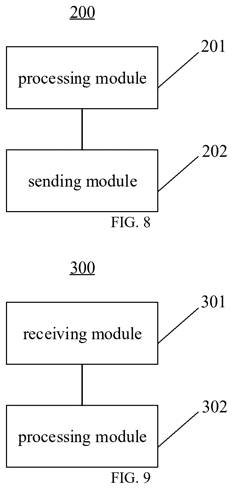

FIG. 8 is a schematic diagram showing an SL communication apparatus according to an example embodiment. Referring to FIG. 8, the apparatus 200 includes: a processing module 201, configured to determine based on a first rule that a positioning service with a second terminal is allowed, where the second terminal is configured to provide the positioning service, and the first rule is used to indicate whether the positioning service with the second terminal is allowed; and a sending module 202, configured to send first information, where the first information is used to instruct the second terminal to perform the positioning service.

In the present disclosure, it is determined based on the first rule that the corresponding positioning service with the second terminal is allowed, so that the privacy policy for the positioning service may be executed in network coverage and/or out of network coverage, thereby avoiding the exposure of respective privacy information of some terminals that require privacy protection, and improving the security of the communication process.

In some embodiments, the processing module 201 is further configured to: determine, based on the first rule in a first phase of SL communication between the first terminal and the second terminal, that the positioning service with the second terminal is allowed. The first phase includes at least one of: a discovery phase of the SL communication between the first terminal and the second terminal; a PC5 link establishment phase of the SL communication between the first terminal and the second terminal; or a PC5 link modification phase of the SL communication between the first terminal and the second terminal.

In the present disclosure, it may be determined based on the first rule in the first phase of the SL communication between the first terminal and the second terminal that the corresponding positioning service with the second terminal is allowed, so that the privacy policy for the positioning service may be executed in network coverage and/or out of network coverage, thereby avoiding the exposure of respective privacy information of some terminals that require privacy protection, and improving the security of the communication process.

In some embodiments, the first rule includes at least one of: an authorization rule for whether the second terminal is allowed to perform the positioning service with the first terminal; or a privacy configuration rule for whether the first terminal is allowed to perform the positioning service with the second terminal.

In the present disclosure, it is determined based on the first rule whether the corresponding positioning service with the second terminal is allowed, so that the privacy policy for the positioning service may be executed in network coverage and/or out of network coverage, thereby avoiding the exposure of respective privacy information of some terminals that require privacy protection, and improving the security of the communication process.

In some embodiments, the first rule includes the privacy configuration rule for whether the first terminal is allowed to perform the positioning service with the second terminal. The processing module 201 is further configured to: determine based on the privacy configuration rule that the first terminal is allowed to perform the positioning service with the second terminal.

In the present disclosure, it is determined based on the privacy configuration rule whether the corresponding positioning service with the second terminal is allowed, so that the privacy policy for the positioning service may be executed in network coverage and/or out of network coverage, thereby avoiding the exposure of respective privacy information of some terminals that require privacy protection, and improving the security of the communication process.

In some embodiments, the first rule includes the authorization rule for whether the second terminal is allowed to perform the positioning service with the first terminal. The processing module 201 is further configured to: authorize the second terminal for the positioning service based on the authorization rule.

In the present disclosure, it is determined based on the authorization rule whether the corresponding positioning service with the second terminal is allowed, so that the privacy policy for the positioning service may be executed in network coverage and/or out of network coverage, thereby avoiding the exposure of respective privacy information of some terminals that require privacy protection, and improving the security of the communication process.

In some embodiments, the first rule is based on a network device configuration; and/or the first rule is stored in the first terminal.

The present disclosure provides a variety of ways to determine the first rule, so as to determine based on the first rule that the corresponding positioning service with the second terminal is allowed, so that the privacy policy for the positioning service may be executed in network coverage and/or out of network coverage, thereby avoiding the exposure of respective privacy information of some terminals that require privacy protection, and improving the security of the communication process.

FIG. 9 is a schematic diagram showing another SL communication apparatus according to an example embodiment. Referring to FIG. 9, the apparatus 300 includes: a receiving module 301, configured to receive first information sent by a first terminal, where the first information is used to instruct the second terminal to perform a positioning service; and a processing module 302, configured to determine based on a first rule that the positioning service with the first terminal is allowed, where the first rule is used to indicate whether the positioning service with the first terminal is allowed.

In the present disclosure, it is determined based on the first rule that the corresponding positioning service with the first terminal is allowed, so that the privacy policy for the positioning service may be executed in network coverage and/or out of network coverage, thereby avoiding the exposure of respective privacy information of some terminals that require privacy protection, and improving the security of the communication process.

In some embodiments, the processing module 302 is further configured to: determine, based on the first rule in a first phase of SL communication between the first terminal and the second terminal, that the positioning service with the first terminal is allowed. The first rule is used to indicate whether the positioning service with the first terminal is allowed; and the first phase includes at least one of: a discovery phase of the SL communication between the first terminal and the second terminal; a PC5 link establishment phase of the SL communication between the first terminal and the second terminal; or a PC5 link modification phase of the SL communication between the first terminal and the second terminal.

In the present disclosure, it may be determined based on the first rule in the first phase of the SL communication between the first terminal and the second terminal that the corresponding positioning service with the first terminal is allowed, so that the privacy policy for the positioning service may be executed in network coverage and/or out of network coverage, thereby avoiding the exposure of respective privacy information of some terminals that require privacy protection, and improving the security of the communication process.

In some embodiments, the first rule includes at least one of: an authorization rule for whether the first terminal is allowed to perform the positioning service with the second terminal; or a privacy configuration rule for whether the second terminal is allowed to perform the positioning service with the first terminal.

In the present disclosure, it is determined based on the first rule whether the corresponding positioning service with the first terminal is allowed, so that the privacy policy for the positioning service may be executed in network coverage and/or out of network coverage, thereby avoiding the exposure of respective privacy information of some terminals that require privacy protection, and improving the security of the communication process.

In some embodiments, the first rule includes the privacy configuration rule for whether the second terminal is allowed to perform the positioning service with the first terminal. The processing module 302 is further configured to: determine based on the privacy configuration rule that the second terminal is allowed to perform the positioning service with the first terminal.

In the present disclosure, it is determined based on the privacy configuration rule whether the corresponding positioning service with the first terminal is allowed, so that the privacy policy for the positioning service may be executed in network coverage and/or out of network coverage, thereby avoiding the exposure of respective privacy information of some terminals that require privacy protection, and improving the security of the communication process.

In some embodiments, the first rule includes the authorization rule for whether the first terminal is allowed to perform the positioning service with the second terminal. The processing module 302 is further configured to: authorize the first terminal for the positioning service based on the authorization rule.

In the present disclosure, it is determined based on the authorization rule whether the corresponding positioning service with the first terminal is allowed, so that the privacy policy for the positioning service may be executed in network coverage and/or out of network coverage, thereby avoiding the exposure of respective privacy information of some terminals that require privacy protection, and improving the security of the communication process.

In some embodiments, the first rule is based on a network device configuration; and/or the first rule is stored in the second terminal.

The present disclosure provides a variety of ways to determine the first rule, so as to determine based on the first rule that the corresponding positioning service with the first terminal is allowed, so that the privacy policy for the positioning service may be executed in network coverage and/or out of network coverage, thereby avoiding the exposure of respective privacy information of some terminals that require privacy protection, and improving the security of the communication process.

It is understandable that the above apparatus 200 may also include any possible modules such as a receiving module, the apparatus 300 may also include any possible modules such as a sending module, and adjustments may be made according to specific conditions, which are not limited in the present disclosure.

Regarding the apparatuses in the above embodiments, the specific manner in which each module performs the respective operation has been described in detail in embodiments of the related methods, and will not be elaborated here.

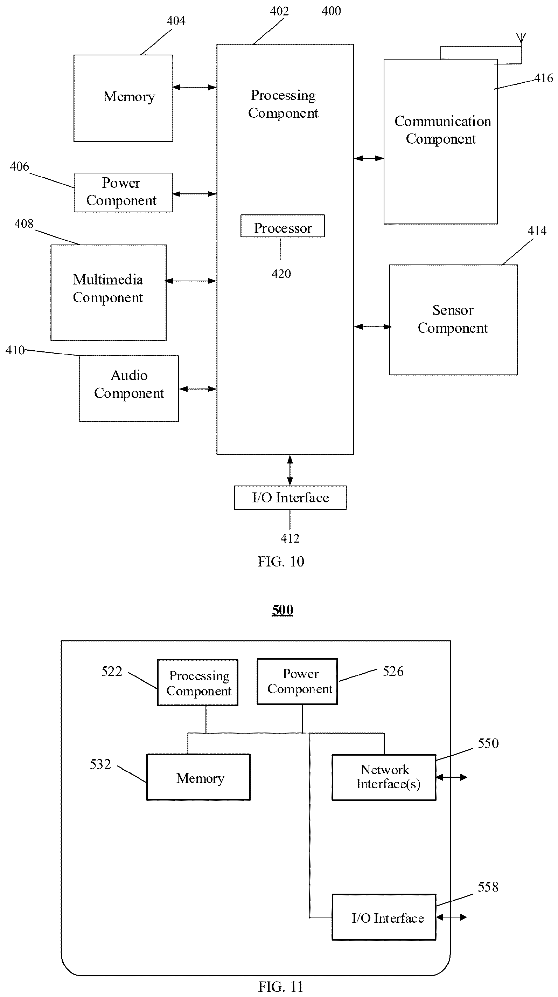

FIG. 10 is a schematic diagram showing an SL communication device according to an example embodiment. For example, the device 400 may be a mobile phone, a computer, a digital broadcast terminal, a messaging device, a game console, a tablet device, a medical device, a fitness device, a personal digital assistant, or the like.

It is understandable that the device 400 may be the first terminal or the second terminal involved in the present disclosure.

Referring to FIG. 10, the device 400 may include one or more of the following components: a processing component 402, a memory 404, a power component 406, a multimedia component 408, an audio component 410, an input/output (I/O) interface 412, a sensor component 414, and a communication component 416.

The processing component 402 typically controls overall operations of the device 400, such as the operations associated with display, phone calls, data communications, camera operations, and recording operations. The processing component 402 can include one or more processors 420 to execute instructions to perform all or some of the steps in the above-described methods. Moreover, the processing component 402 may include one or more modules that facilitate the interaction between the processing component 402 and other components. For instance, the processing component 402 may include a multimedia module to facilitate the interaction between the multimedia component 408 and the processing component 402.

The memory 404 is configured to store various types of data to support the operation of the device 400. Examples of such data include instructions for any applications or methods operated on the device 400, contact data, phonebook data, messages, pictures, videos, etc. The memory 404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 provides power to various components of the device 400. The power component 406 may include a power management system, one or more power sources, and any other components associated with the generation, management, and distribution of power in the device 400.

The multimedia component 408 includes a screen providing an output interface between the device 400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 408 includes a front camera and/or a rear camera. The front camera and/or the rear camera may receive an external multimedia datum while the device 400 is in an operation mode, such as a photographing mode or a video mode. Each of the front camera and the rear camera may be a fixed optical lens system or have focus and optical zoom capability.

The audio component 410 is configured to output and/or input audio signals. For example, the audio component 410 includes a microphone (MIC) configured to receive an external audio signal when the device 400 is in an operation mode, such as a call mode, a recording mode, and a voice recognition mode. The received audio signal may be further stored in the memory 404 or transmitted via the communication component 416. In some embodiments, the audio component 410 further includes a speaker to output audio signals.

The I/O interface 412 provides an interface between the processing component 402 and peripheral interface modules, such as keyboards, click wheels, buttons, and the like. The buttons may include, but are not limited to, a home button, a volume button, a starting button, and a locking button.

The sensor component 414 includes one or more sensors to provide status assessments of various aspects of the device 400. For instance, the sensor component 414 may detect an open/closed status of the device 400, relative positioning of components, e.g., the display and the keypad, of the device 400, a change in position of the device 400 or a component of the device 400, a presence or absence of user contact with the device 400, an orientation or an acceleration/deceleration of the device 400, and a change in temperature of the device 400. The sensor component 414 may include a proximity sensor configured to detect the presence of nearby objects without any physical contact. The sensor component 414 may further include a light sensor, such as a CMOS or CCD image sensor, for use in imaging applications. In some embodiments, the sensor component 414 may further include an accelerometer sensor, a gyroscope sensor, a magnetic sensor, a pressure sensor, or a temperature sensor.

The communication component 416 is configured to facilitate communication, wired or wireless, between the device 400 and other devices. The device 400 can access a wireless network based on a communication standard, such as Wi-Fi, 2G, or 3G, or a combination thereof. In an illustrative embodiment, the communication component 416 receives a broadcast signal or broadcast associated information from an external broadcast management system via a broadcast channel. In an illustrative embodiment, the communication component 416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the device 400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above methods.

In an illustrative embodiment, there is also provided a non-transitory computer readable storage medium including instructions, such as included in the memory 404, executable by the processor 420 in the device 400, for completing the above methods. For example, the non-transitory computer-readable storage medium may be a ROM, a random access memory (RAM), a CD-ROM, a magnetic tape, a floppy disc, an optical data storage device, and the like.

FIG. 11 is a schematic diagram showing another SL communication device according to an example embodiment. For example, the device 500 may be provided as a base station or a server. Referring to FIG. 11, the device 500 includes a processing component 522, which further includes one or more processors; and a memory resource represented by a memory 532 for storing an instruction executable by the processing component 522, such as an application. The application stored in the memory 532 may include one or more modules, each of which corresponds to a set of instructions. In addition, the processing component 522 is configured to execute instructions to perform the above methods.

It can be understood that the device 500 may be the network device mentioned in the above embodiments.

The device 500 may also include a power component 526 configured to perform power management of the device 500, a wired or wireless network interface 550 configured to connect the device 500 to a network, and an input/output (I/O) interface 558. The device 500 may operate based on an operating system stored in the memory 532, such as Windows ServerTM, Mac OS XTM, UnixTM, LinuxTM, FreeBSDTM, or the like.

The present disclosure can ensure that a UE provided with required information can perform privacy/authorization verification for ranging/SL positioning services without assistance of the network, so as to determine, for example, whether a ranging/SL positioning request from a peer UE is allowed, whether its location information can be shared with a peer UE, etc., thereby avoiding the exposure of respective privacy information of some terminals that require privacy protection, and improving the security of the communication process.

It is further understood that in the present disclosure, "a plurality of" refers to two or more, and other quantifiers are similar thereto. The term "and/or" describes an association relationship of associated objects, indicating that three relationships may exist. For example, A and/or B may represent: A alone, both A and B, and B alone. The character "/" generally indicates an "or" relationship of the associated objects. The singular forms "a", "an", "the" and "said" are also intended to include plural forms, unless clearly indicated otherwise.

It is further understood that the terms "first", "second", and the like are used to describe various information, but these information should not be limited to these terms. These terms are used to distinguish information of the same type from each other, and do not indicate a specific order or degree of importance. In fact, the terms "first", "second", and the like can be used interchangeably. For example, without departing from the scope of the present disclosure, the first information can also be referred to as the second information, and similarly, the second information can also be referred to as the first information.

It is further understood that the meanings of the phrases or words "in response to" and "if" involved in the present disclosure depend on the context and the usage scenario. For example, the phrase "in response to" used herein can be interpreted as "upon" or "when" or "if".

It is further understood that, although operations of some embodiments of the present disclosure are described in a specific order in the drawings, it should not be understood as requiring these operations to be performed in the specific order as shown or in a serial order, or requiring the execution of all the operations shown to obtain the desired results. In certain environments, multitasking and parallel processing may be advantageous.

Other embodiments of the disclosure will be apparent to those skilled in the art from consideration of the specification and practice of the disclosure disclosed here. This application is intended to cover any variations, uses, or adaptations of the present disclosure following the general principles thereof and including such departures from the present disclosure as come within known or customary practice in the art.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A sidelink (SL) communication method, performed by a first terminal, comprising:
determining, based on a first rule, that a positioning service with a second terminal is allowed, wherein the second terminal is configured to provide the positioning service, and the first rule is used to indicate whether the positioning service with the second terminal is allowed; and
sending first information, wherein the first information is used to instruct the second terminal to perform the positioning service.

2. The method according to claim 1, wherein determining, based on the first rule, that the positioning service with the second terminal is allowed comprises:
determining, based on the first rule in a first phase of SL communication between the first terminal and the second terminal, that the positioning service with the second terminal is allowed;
wherein the first phase comprises at least one of:
a discovery phase of the SL communication between the first terminal and the second terminal;
a proximity communication PC5 link establishment phase of the SL communication between the first terminal and the second terminal; or
a PC5 link modification phase of the SL communication between the first terminal and the second terminal.

3. The method according to claim 1 or 2, wherein the first rule comprises at least one of:
an authorization rule for whether the second terminal is allowed to perform the positioning service with the first terminal; or
a privacy configuration rule for whether the first terminal is allowed to perform the positioning service with the second terminal.

4. The method according to claim 3, wherein the first rule comprises the privacy configuration rule for whether the first terminal is allowed to perform the positioning service with the second terminal;
wherein determining, based on the first rule, that the positioning service with the second terminal is allowed comprises:
determining, based on the privacy configuration rule, that the first terminal is allowed to perform the positioning service with the second terminal.

5. The method according to claim 3, wherein the first rule comprises the authorization rule for whether the second terminal is allowed to perform the positioning service with the first terminal;
wherein determining, based on the first rule, that the positioning service with the second terminal is allowed comprises:
authorizing the second terminal for the positioning service based on the authorization rule.

6. The method according to any one of claims 1 to 5, wherein the first rule is based on a network device configuration; and/or
the first rule is stored in the first terminal.

7. A sidelink (SL) communication method, performed by a second terminal, comprising:
receiving first information sent by a first terminal, wherein the first information is used to instruct the second terminal to perform a positioning service; and
determining, based on a first rule, that the positioning service with the first terminal is allowed, wherein the first rule is used to indicate whether the positioning service with the first terminal is allowed.

8. The method according to claim 7, wherein determining, based on the first rule, that the positioning service with the first terminal is allowed comprises:
determining, based on the first rule in a first phase of SL communication between the first terminal and the second terminal, that the positioning service with the first terminal is allowed;
wherein the first rule is used to indicate whether the positioning service with the first terminal is allowed; and the first phase comprises at least one of:
a discovery phase of the SL communication between the first terminal and the second terminal;
a proximity communication PC5 link establishment phase of the SL communication between the first terminal and the second terminal; or
a PC5 link modification phase of the SL communication between the first terminal and the second terminal.

9. The method according to claim 7 or 8, wherein the first rule comprises at least one of:
an authorization rule for whether the first terminal is allowed to perform the positioning service with the second terminal; or
a privacy configuration rule for whether the second terminal is allowed to perform the positioning service with the first terminal.

10. The method according to claim 9, wherein the first rule comprises the privacy configuration rule for whether the second terminal is allowed to perform the positioning service with the first terminal;
wherein determining, based on the first rule, that the positioning service with the first terminal is allowed comprises:
determining, based on the privacy configuration rule, that the second terminal is allowed to perform the positioning service with the first terminal.

11. The method according to claim 9, wherein the first rule comprises the authorization rule for whether the first terminal is allowed to perform the positioning service with the second terminal;
wherein determining, based on the first rule, that the positioning service with the first terminal is allowed comprises:
authorizing the first terminal for the positioning service based on the authorization rule.

12. The method according to any one of claims 7 to 11, wherein the first rule is based on a network device configuration; and/or
the first rule is stored in the second terminal.

13. A sidelink (SL) communication apparatus, comprising:
a processing module, configured to determine, based on a first rule, that a positioning service with a second terminal is allowed, wherein the second terminal is configured to provide the positioning service, and the first rule is used to indicate whether the positioning service with the second terminal is allowed; and
a sending module, configured to send first information, wherein the first information is used to instruct the second terminal to perform the positioning service.

14. A sidelink (SL) communication apparatus, comprising:
a receiving module, configured to receive first information sent by a first terminal, wherein the first information is used to instruct a second terminal to perform a positioning service; and
a processing module, configured to determine, based on a first rule, that the positioning service with the first terminal is allowed, wherein the first rule is used to indicate whether the positioning service with the first terminal is allowed.

15. A sidelink (SL) communication device, comprising:
a processor; and
a memory for storing processor-executable instructions;
wherein the processor is configured to: perform the method according to any one of claims 1 to 6.

16. A sidelink (SL) communication device, comprising:
a processor; and
a memory for storing processor-executable instructions;
wherein the processor is configured to: perform the method according to any one of claims 7 to 12.

17. A non-transitory computer-readable storage medium, having stored therein instructions that, when executed by a processor of a first terminal, cause the first terminal to perform the method according to any one of claims 1 to 6.

18. A non-transitory computer-readable storage medium, having stored therein instructions that, when executed by a processor of a second terminal, cause the second terminal to perform the method according to any one of claims 7 to 12.
